Europäisches Patentamt

European Patent Office

Office européen des brevets

(19)

(11) Publication number: **0 202 747**

**A2**

(12) **EUROPEAN PATENT APPLICATION**

(21) Application number: 86302545.8

(22) Date of filing: 07.04.86

(51) Int. Cl.⁴: **G 06 F 15/72**

(30) Priority: 20.04.85 GB 8510137
09.08.85 GB 8520053

(43) Date of publication of application:
26.11.86 Bulletin 86/48

(84) Designated Contracting States:
DE FR GB

(71) Applicant: **Quantel Limited**
**Kenley House Kenley Lane**
**Kenley Surrey CR2 5YR(GB)**

(72) Inventor: **Miles, Barry Donald Ruberry**
**14 Chesterfield Road**
**Newbury Berkshire(GB)**

(74) Representative: **Logan, Allan Beattie**
**c/o Quantel Limited Engineering Facility Kiln Road Shaw**
**Newbury Berkshire RG13 2HA(GB)**

(54) Improvements in or relating to video image creation systems.

(57) A system for creating video images by 'drawing' on a touch tablet with a stylus. Addresses designated by the stylus are translated by a computer (16) into addresses in a frame delay store (13). The operator may choose an artists implement, the effect of which is to simulated in the image by brush stamp signals representing the distribution power of the implement. Brush stamp signals are provided for a patch of signals round a designated address. During a frame period the brush stamp signals are processed to produce signals representing the effect of overlapping brush stamps for a portion of line drawn in that period. The store is a frame delay store where the stored signals are continuously recycled. During a cycle of the store signals corresponding to the addresses covered by the brush stamps are sequentially up-dated by combining with incoming video signals in proportions determined by the brush signals. This produces the effect on a screen of a line drawn with the chosen implement.

*Fig.2.*

## IMPROVEMENTS IN OR RELATING TO VIDEO IMAGE CREATION SYSTEMS

This invention relates to improvements in video image creation systems.

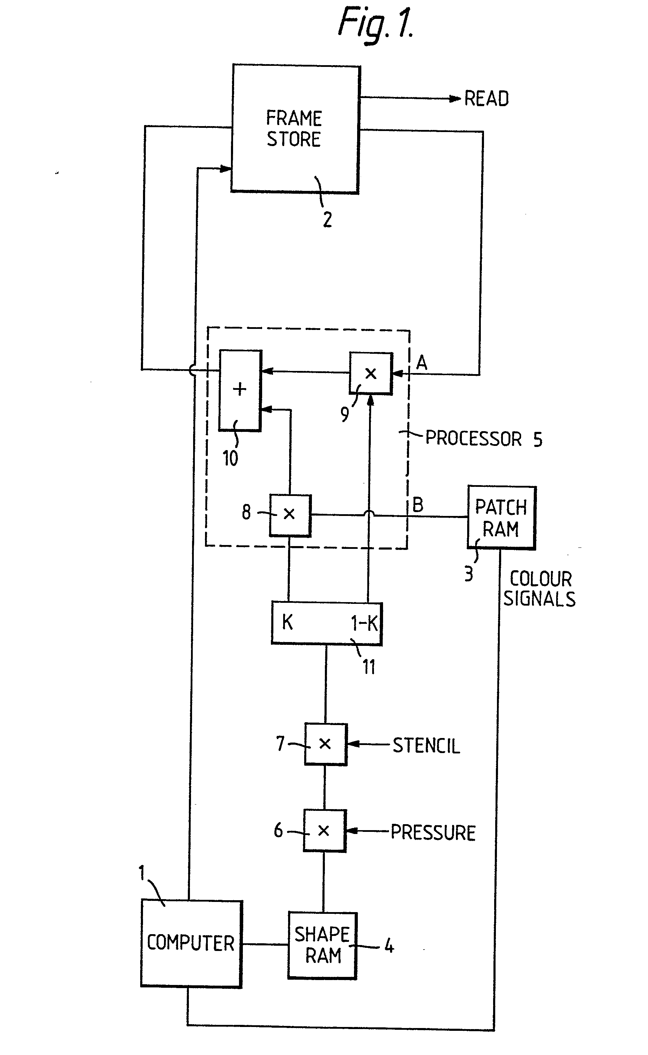

A prior art system for video image creation is described in our co-pending U.K. Patent 2089625, which is incorporated herein by reference and one example of such a system is shown in Figure 1 hereof. The system is controlled via a touch tablet/stylus combination and a keyboard (not illustrated) and is capable of producing video images that resemble closely those that would be produced using conventional artists materials. To achieve the realism incoming signals and stored signals are mixed so that there is a blending and this blending is controlled by a distribution signal related to the distribution power of the implement which is being simulated. For example, if the operator wishes to draw a stroke on the screen that simulates the use of a wide brush and real paint the operator 'draws' a line on the touch tablet using the stylus and chooses, say, the colour red and the implement 'wide brush'. The computer 1 receives signals from the touch tablets representing the co-ordinates of points along the line and also command signals for the type of brush and the colour. To achieve the desired effect of a wide stroke in the final image, a patch of picture points adjacent and including each designated picture point must be processed. Taking the co-ordinate signal for the first point on the line the computer produces a corresponding address in the frame store in which signals representing the picture being created are accumulated so that when the signals in the store 2 are read and applied to a colour TV monitor the first point in the line will appear on the screen of the colour monitor in the position indicated by the stylus on the touch tablet. The address produced by the computer is the address of the corner of the patch of picture point signals to be processed. The computer also causes red video signals to be loaded into a patch of locations in the patch RAM 3 and the distribution signals for a wide brush to be loaded into a patch of locations in the shape RAM 4. The distribution signal represents the effect produced by a wide brush with white paint on a black background, i.e. the intensity distribution produced by the selected implement.

Starting from the corner address of the patch the computer generates the addresses of all points in the patch referred to the frame store 2 and for each address generated the signals for that address are read from frame store 2 and patch store 3 into processor 5, which comprises two multipliers 8 and 9 and an adder 10. The processing is done picture point by picture points. The distribution signal for each address is also made available to processor from the shape RAM 4, after being multiplied in 6 by a factor related to the pressure of the stylus on the touch tablet and being perhaps multiplied in 7 by a stencil signal, and it is applied as a multiplication factor K to the multiplier 8. The complement of K, namely 1-K, is produced by the circuit 11 and applied to the multiplier 9. The output of the processor for each picture point can be seen to be KA + (1-K)B where A is the new signal and B the stored signal and so the value of K determines the proportions of incoming and stored signals which make up the new image signal. The image signals in the frame store 2 are also read and rewritten in the store 2 cyclically in TV raster format, so that the image being created can be displayed on the TV monitor.

Once each picture point within the patch has been processed the computer generates the address for the corner of the next patch and the processing then runs through this patch. Each patch is called a brush stamp and to produce a continuous line on the screen the brush stamps will have to overlap so signals for some picture points will be processed a plurality of times for one line. The system operates at a speed such that the lines are seen on a monitor at essentially the same time as the operator draws them. It will be understood that this is a simplified explanation of the system and it will in fact operate on three video signal components separately, say for example R, G, B signals.

This system produces images which are very close to those produced using paint on paper etc. although the images are made up from colour video signals and viewed on a colour T.V. monitor. However, the system requires random access to the frame store, for updating the image in response to each application of the stylus, which access is interleaved with the normal reading of the video signals in TV raster format for display or refresh purposes. In addition to this complication, the use of a random access store as the frame store for the video signals, which is necessary for the processing, is costly.

The object of the invention is to produce a video image creation system which will produce realistic images in approximately real time more advantageously and preferably also without the use of a random access frame store.

According to the present invention there is provided a video image creation system comprising operator controlled means for designating points in a line to be produced on an image, means responsive to said operator controlled means for generating a patch of signals representing the video effect of successive overlapping brush stamps along said line, a store for video signals representing the image, means for sequentially reading video signals from said store, and means for updating the signals in said store once per reading cycle thereof in response to video effect signals generated during a preceding cycle period.

Further according to the present invention there is provided a video image creation system comprising; operator controlled means for designating points on an image to be created, means for generating brush stamp signals for controlling the video effect of signals to be used in the image, means for multiplying factors related to successive brush stamp signals for a point to generate a signal representing the effect of overlapping brush stamps, means for storing colour video signals representing an image, said store means being updated at intervals, and means for updating the signals in said store at intervals in response to the said generated signal.

One embodiment of the present invention will now be described with reference to the accompanying drawings :

Figure 1 shows an example of a prior art system.

Figure 2 shows one example of an embodiment of this invention.

Figure 3 shows a second example of an embodiment of this invention.

Figure 4 is a pictorial representation of the operation of the embodiment.

The invention takes advantage of memory chips that can be assembled to produce a store which is continuously recycled to introduce a one frame delay. In the example of the prior art system described herein the frame store was composed of random access memory chips so that the image signals processing could be carried out as required in response to the operators input.

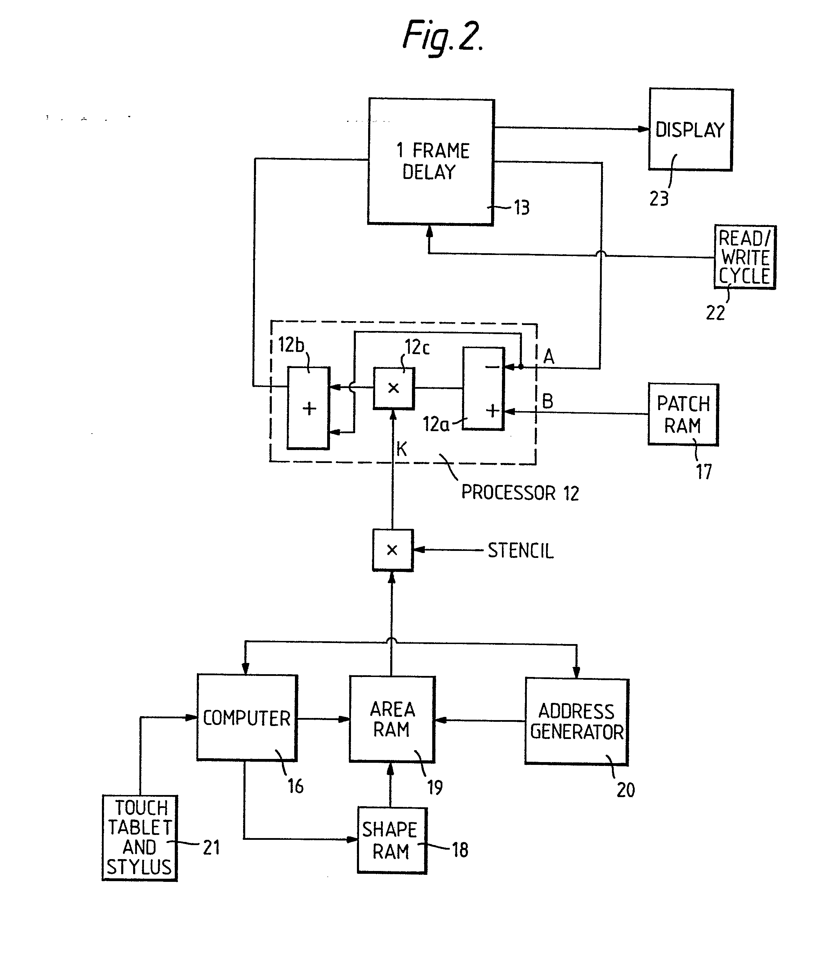

As in the prior art system the system in Figure 2 receives signals from the touch table/stylus combination giving co-ordinates of points on the touch tablet along a line drawn by the operator. The brush shape, size, the paint colour etc. are also available to be chosen by the operator in the same manner as in the prior art system.

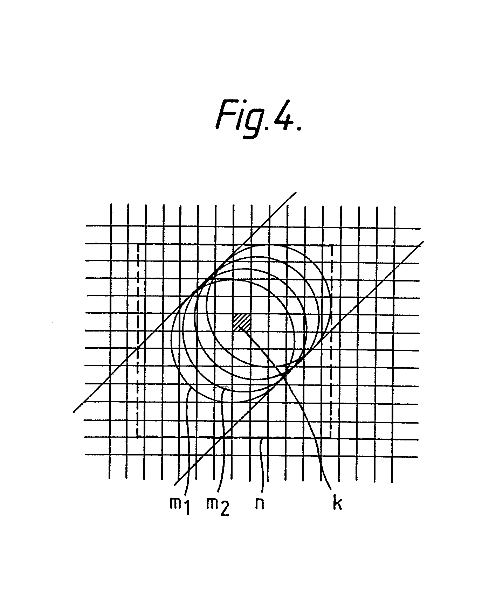

Figure 4 is a pictorial representation of the effect of several brush stamps in a particular stroke. Each small square such as K represents a picture point in the picture being produced are the circles m, $m_2$ ....... represent successive brush stamps, each brush stamp enclosing a group of picture points. The shape RAM 18 (which corresponds to 4) holds signals representing the distribution of colour effected by the selected brush to each picture point 'covered' by the brush at any one position of the brush. These signals remain unchanged for as long as any particular implement is selected and in general the signals define the distribution of the brush to a rectangle of picture points such as indicated by the dotted outline a. For picture points in the rectangle which are outside the stamp of the brush, the distribution signals would be zero. Within the stamp, the distribution signals may vary to represent the brush shape as explained in our U.K. Patent 2089622. As the artist moves the stylus, the position of the brush stamp will change and for each of a succession of positions of the stamps, the signals from the shape RAM 18 are read and are processed as will be explained later. In general successive brush stamps overlap when a stroke is made, and as can be seen in Figure 4 in the case of picture point K, for example the distribution signal for different points in the brush stamps $m, m_2 \ldots \ldots$ should be used for processing of the same point in the picture. In practice, the number of brush stamps affecting any one point in the picture, when making a single stroke, can be high, as much as ten or more depending on the speed with which the artist makes the stroke.

When signals are received by the computer 16 from the touch tablet and keyboard, the computer produces the addresses in a patch, and loads the selected colour video signal components into patch RAM 17 and the distribution signals into shape RAM 18. Up to this point the system works in the same manner as the prior art apparatus, but at this point the distribution signals are not immediately used to control the processing of the colour signals from 17 with the stored signals from the frame store. Instead the distribution signals are processed in a manner described later and held in an another store 19 called the area RAM until the appropriate time in the respective cycle of frame store 13, which in this case is a cyclic frame delay store instead of a RAM. The size of the store 19 is such that it can store a distribution signal for each picture point which is contained within that portion of a stroke that can be drawn in a frame time. This size can be calculated. When the operator draws a line on the touch tablet the computer identifies the co-ordinates of the points along that section of a line drawn in any particular frame period. The distribution signals from shape RAM 18 for each picture point enclosed within successive brush stamps along the line are processed to produce a new set of distribution signals for the picture points enclosed within the respective portion of the stroke. This processing is carried out under control of the computer 16 and takes into account the pressure factor from the stylus, the pressure multiplier (such as 6 in Figure 1) is omitted for convenience in Figure 2, but would normally be located between 18 and 19. Other factors such as dwell time of the stylus over a particular point can also be taken into account. The result in processing of the distribution signals is that at the end of a frame period the signals in area RAM 19 will represent the video effect of each point of the stroke, as if drawn using white paint on a black background. The distribution signals are used as control signals to control the signals from the patch RAM 17 and also as applicable, the signals from the frame delay 13. It should be clear that the signals from the area RAM 19 may relate to a succession of brush stamps which would normally overlap each other, as described from a brush stamp which shows only the distribution for one brush position.

The computer 16 not only produces addresses in successive patches, but produces via address generator 20 and holds the co-ordinates of successive points relative to the frame delay store B within the length of line drawn in one cycle period of the store 13. These co-ordinates are translated into stamp addresses in the area RAM 19, for successive picture points enclosed within brush stamps along the line, assuming that the area represented by the RAM 19 is positioned relative to the image frame to contain the length of stroke along the line drawn on the touch tablet. The computer also generates in 20 and holds a reference address, in terms of the frame delay store 13, for the area in area RAM 19, usually the address of the ²

top left hand corner of the area when positioned as aforesaid. The stamp addresses are used to read distribution signals for successive brush stamps from the shape RAM 18 and apply them to the area RAM 19, one set of such signals being applied for each brush stamp along a length of line.

The reference address is compared with the successive addresses accessed during a read/write cycle of the store 11. When identity is detected, the computer initiates an addressing cycle of an address generator 20 to read the signals from the area RAM 19 to the processor 12, which comprises a subtractor 12A, multiplier 12B and adder 12C arranged as shown. This processor is equivalent to processor 5 in Figure 1. The addressing cycle of 20 is such that each signal in the area RAM 19 is read in synchronism with the signal read from the corresponding picture point in the store 13, by the read/write cycle generate 22 the area represented by the RAM 19 positioned as aforesaid. The signal read from the RAM 19 is the signal K which is used in the processor 12 for the signals $\underline{A}$ and $\underline{B}$ as described in relation to Figure 1.

It will be understood that the procedure described is repeated for every stroke, or length of stroke, drawn within successive cycle periods of the frame delay store 13. It will be appreciated that for any picture point signal read from the store 13, at a time when K is zero, the signal will be rewritten in the store 13 without change, i.e. it is merely refreshed. An existing signal B is modified only if the operator has made a new stroke over the respective picture point. Nevertheless the updating is performed during the normal read/write cycles of the store 13. The patch store 17 for the selected colour in the case of Figure 2 has to provide the appropriate signals for all picture points in the area represented by the RAM 17. A register, from which the same colour signals can be read repeatedly in time with the addressing, effected by the adder generator 20 could be used instead of the RAM. The access to area RAM 19 is of sufficient speed to enable the new picture point signals to be produced from processor 12 at the correct timing for the refresh cycle. When a set of processed distribution signals from the area RAM 19 is being used in the processor 12, any picture point addresses which may be generated by the operator using the stylus during that interval are held in the computer until the processing in the processor 12 is completed for the respective frame (or field) period. The whole frame period other than such intervals is however available for processing the distribution signals and writing them in the area RAM 19. Starting from any such interval, the address in the store for the corner of the next area stored in area RAM 19 is produced in address generator 20 and at the next cycle time the further set of newly processed distribution signals is used in the processor 12. So the system described here receives signals indicative of a stroke to appear on the image and taking one section of that stroke, processes the brush stamps for this section before adding the new information as the store 13 is cycled.

In the system shown in Figure 2 the processing selected for the distribution signals is relatively simple. Each point in a line designated on the touch tablet has distribution signals for the patch of picture points including ones adjacent to it and the distribution signals for successive points are combined to produce a distribution signal for a section of the stroke to be drawn where the respective patches of distribution signals (brush stamps) overlap. In the prior art system the processing was such that each patch was individually processed so that new video signals were stored in the frame store patch by patch. When the next patch was processed then for points which overlapped the new video signal included a component produced by multiplying the stored video signal by the distribution signal so this new signal would be related to the two distribution signals. In the system illustrated in Figure 2, it has been found to be sufficient to process the distribution signals accumulated in the store 19 simply by adding the distribution signals for overlapping picture points in successive brush stamps, such addition being achieved under the control of the computer 16. The system is scaled so that the maximum video effect signal, which results for the addition of the distribution signals for the maximum number of picture points which may overlap, is normalised to unity. In a simple case this may be done by dividing the sum by the maximum number of picture points. If desired the video effect signals accumulated in the store 19 can be non linearly modified, for example with the aid of a look up table, so that the signal is 'compressed' as a function of its magnitude before normalisation to unity. This will produce an effect of processing closer to that produced by the prior art processing system.

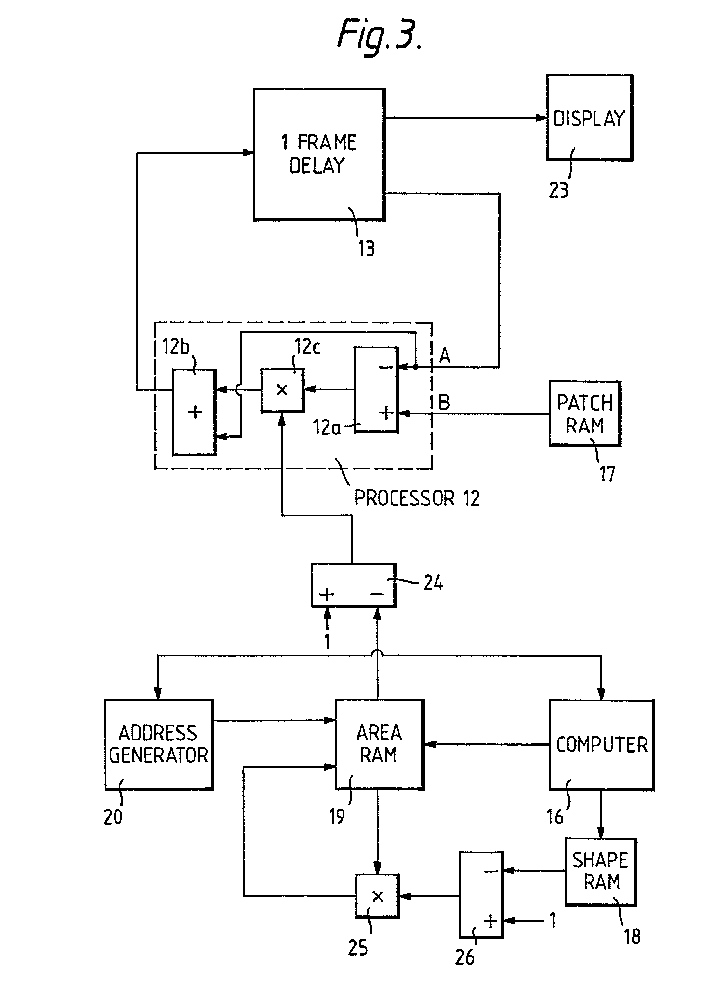

A second way of processing the distribution signals to produce the video effect signals is shown in Figure 3.

To understand this processing it is necessary to consider the processing of the picture point signals which occurs in the system of UK Patent 2089625. The processor for this system produces an output signal for each picture point which is a blend of the colour signal A stored in the frame store for that point and the incoming colour signal B for the same point from a patch RAM. The signal which is output from the processor and written into the frame store to replace the signal A is $(1-K)A + KB$ where K is the distribution signal.

If we consider a picture point in a first brush stamp then the output $A1 = (1 - Ko) Ao + Ko Bo$, where the suffixes 0 refer brush stamp to the first and the suffix 1 refers to the resultant signals stored in the frame store. When the next brush stamp overlaps this point with a value $K_1$ then:

$$A_2 = (1 - K_1) A_1 + K_1 B_1$$

but if it is assumed that colour the same over a stroke which need not be the case, $B_1 = Bo$ and substituting for $A_1$:

$$A_2 = (1 - K_1) ((1 - Ko) Ao + KoBo) + K_1 B_0$$

if the substitutions $K' = 1-K$ is now made:

$$A_2 = K'_1 Ko'Ao + (1 - K'_1 Ko')Bo$$

It will be obvious that for the nth overlapping brush stamp at the point under consideration:

$$An+1 = (K'n .. ..K'o)Ao + (1 - K'n .. ..K'o)Bo$$

So if the combined brush stamp signals are processed by the computer to produce $(K'n.. ..K'o)$ then by using $(1 - (K'n .. ..K'o))$ in the processor 12 as in Figure 2 the same result as in UK patent application number 8136539 can be achieved. This processing can be achieved using fairly simple circuits such as the components 24-26, shown in Figure 3. When the brush stamp signals have been loaded into shape RAM 18 the first value for K for a picture point is input to subtractor 26 which produces $Ko' = 1-Ko$ and this is stored in area RAM 19. When the next value for K for that point is accessed for an overlapping brush stamp this is converted to $K_1$ and forms one input to multiplier 25, the second input being Ko' from area RAM 19. The resultant $\bar{K}_1$ Ko' is then written into RAM 19. When all the brush stamps for that section of the stroke drawn in the frame period have been processed each point in the stroke will have a value for Kn'.. ..Ko' stored in area RAM 19. In this case before being applied to processor 12 the values for each point from area RAM 19 are passed through subtractor 24 to produced $K = (1 - Kn' .. ..Ko')$

In practice the systems illustrated would include three paths for three video components, for example, Y,I.Q or R,G,B. The timing of the system is such that the operator will be able to view the image as it is being created and for this purpose the contents of the store 13 being read to a colour T.V. monitor. The signals in store 13 can be committed to a long term store when the operator is satisfied with the picture created.

In an alternative form of the invention, the updating of the video signals in the frame delay store 13 is not carried out on reading respective video signals in the area represented by the RAM 17 during the normal read and write cycle. The updating is carried out during the field blanking intervals when video signals are not normally read from the store. To achieve the updating in the limited time available during blanking intervals it is necessary to have random access to those locations in the store at which video signals are to be found corresponding to the picture points in the area RAM 19. Therefore in this case, the RAM 13 is required to be a random access store; nevertheless, this form of the invention still achieves significant advantages in handling the video signals, since the number of addresses in the frame store 13 which have to be accessed in each cycle is substantially reduced compared with the system illustrated in Figure 1 where the number of addresses to be accessed is the product of the number of brush stamps in a cycle by the number of picture points per patch.

It will be appreciated that some of the signals derived by the computer 16 to represent co-ordinates or points on a line drawn by the operator on the touch tablet, may in fact be produced by interpolating between signals representing points acutally designated by the touch tablet/stylus combination.

CLAIMS

1. A video image creation system comprising operator controlled means (21) for designating points in a line to be produced on an image, means (16) for providing brush stamp signals, a store (13) for video signals representing the image, means (12) for processing signals from said store with incoming video signals in response to said brush stamp signals, and means (23) for displaying said signals from said store, characterised by, means (19) for generating a patch of signals representing the video effect of successive overlapping brush stamps along said line, means (22) for reading video signals from said store, and said processing means operating to update the signals in said store once per reading cycle thereof in response to video effect signals generated during a preceding cycle period.

2. A system as in claim 1 further characterised in that said operator controllable means comprises a touch tablet and a stylus and said generating means operates to generate a patch of video effect signals in dependence on the pressure on the stylus.

3. A system as in claim 1 further characterised in that said store is a frame delay store updatable once a frame period.

4. A system as in claim 3 further characterised in that said means for generating a patch of signals generates signals representing the video effect of successive overlapping brush stamps along the portion of the line designated in a frame period,
and said processing means updates the corresponding signals in said store during one cycle of the frame delay store.

5. A system as in claim 4 characterised in that said processing means updates the corresponding signals by combining, for each address, an incoming video signal with the signal stored at that address in the frame delay store in proportions determined by the video effect signals.

6. A video image creation system as in claim 3 characterised in that said updating means updates the signals during the refresh cycle of the frame delay store.

7. A video image creation system as in claim 1 characterised in that said store comprises a random access store and in that said processing means updates the signals during the blanking intervals of the store.

8. A video image creation system comprising; operator controlled means (21) for designating points on an image to be created, means (16) for generating brush stamp signals for controlling the video effect of signals to be used in the image, and means (13) for storing colour video signals representing an image characterised by, means (25, 26) for multiplying factors related to successive brush stamp signals for a point to generate a signal representing the effect of overlapping brush stamps, said store means being updated at intervals and means (12) for updating the signals in said store at intervals in response to said generated signals.

9. A system as in claim 8 further characterised in that said store means is a frame delay store updatable once a frame period.

10. A system as in claim 8 further characterised by subtractor means (24) for producing a signal representing one minus the generated signal, and said means for updating the signals in said store includes means for combining incoming video signals with stored signals in proportions determined by said signal from said subtractor.

11. A video image creation system comprising a store for video signals representing image points on the image, means for setting up a signal representing a desired colour, means for producing a sequence of brush stamps defining a stroke in said image, each brush stamp comprising a plurality of distribution signals representing the distribution of said colour in said image at a patch of image points, the brush stamps defining a stroke including overlapping stamps so that a plurality of signals represent distributions of said colour to individual points in said image, characterised by, means for combining the distribution signals for individual image points to produce video effect signals for the respective points, and means for updating the video signal in said store for particular image points in response to the stored video signal for the point, said colour signal and the respective video effect signal.

Fig.1.

0202747

# Fig.2.

# Fig.3.

# Fig.4.

$m_1$  $m_2$   $n$      $k$